Europäisches Patentamt

European Patent Office

Office européen des brevets

(19)

(11) Numéro de publication: **0 106 757**
**B1**

(12) **FASCICULE DE BREVET EUROPEEN**

(45) Date de publication du fascicule du brevet:
02.04.86

(51) Int. Cl.⁴: **B 61 D 3/18**, B 60 P 3/08

(21) Numéro de dépôt: **83401960.6**

(22) Date de dépôt: **07.10.83**

(54) **Wagon porte-automobile à deux étages.**

(30) Priorité: **08.10.82 FR 8216857**

(43) Date de publication de la demande:
**25.04.84 Bulletin 84/17**

(45) Mention de la délivrance du brevet:
**02.04.86 Bulletin 86/14**

(84) Etats contractants désignés:
**BE DE GB IT**

(56) Documents cités:
**FR - A - 1 373 916**
**FR - A - 2 253 657**
**FR - A - 2 260 480**
**FR - A - 2 424 148**
**GB - A - 571 230**
**GB - A - 716 260**
**GB - A - 762 028**
**US - A - 4 238 168**

(73) Titulaire: **SOCIETE NOUVELLE DES ATELIERS DE VENISSIEUX, 40 boulevard Henri Sellier, F-92150 Suresnes (FR)**
Titulaire: **Etablissements FAUVET-GIREL, 40 boulevard Henri Sellier, F-92150 Suresnes (FR)**

(72) Inventeur: **Renard, Michel, Bâtiment 13 Menival les Gravières, F-69800 Saint-Priest (FR)**

(74) Mandataire: **Loyer, Bertrand et al, Cabinet Pierre Loyer 18, rue de Mogador, F-75009 Paris (FR)**

ACTORUM AG

## Description

La présente invention concerne un véhicule porte-automobiles à pont supérieur équipé, à chaque extrémité, d'une rampe d'accès articulée.

L'utilisation de wagons à deux étages est aujourd'hui largement répandue pour le transport de véhicules automobiles. Dans la plupart des cas, le pont supérieur est fixe en hauteur et il est équipé, à chacune de ses deux extrémités, d'une rampe articulée destinée à permettre l'accès des véhicules à transporter.

Ces wagons ont pour défaut d'avoir une différence de hauteur entre le plancher inférieur et le pont supérieur qui est déterminée une fois pour toutes, ce qui limite à une hauteur déterminée les possibilités de chargement de véhicules encombrants sur le plancher inférieur.

Pour pallier cet inconvénient, on a construit des wagons à deux étages, par exemple selon le brevet fraçais FR-A N° 2424148, dans lesquels le pont supérieur est entièrement mobile verticalement, le pont supérieur pouvant même descendre complètement sur le plancher inférieur afin de permettre le transport de très gros véhicules utilitaires. Pour de tels wagons, on utilise la mobilité du pont supérieur pour incliner celui-ci d'un côté ou de l'autre, afin de permettre l'accès au deuxième étage des véhicules à transporter.

Ce dernier type de wagons, s'il présente l'avantage de permettre une plus grande souplesse pour le chargement de gros véhicules, présente néanmoins un inconvénient important en ce qui concerne la puissance à mettre en œuvre pour remettre rapidement le pont supérieur en position horizontale après qu'il a été chargé. En utilisation manuelle, une telle opération nécessite un mécanisme extrêmement démultiplié, donc très long à manœuvrer.

Le véhicule porte-automobiles à deux étages conforme à l'invention présente les avantages des dispositifs connus jusqu'alors, sans en présenter les inconvénients. Il est du type où le pont supérieur comporte, à chaque extrémité, une rampe d'accès articulée et des moyens permettant de le déplacer dans le sens vertical.

Selon l'invention, les points d'action des moyens de déplacement vertical du pont supérieur sont situés sur les rampes d'accès, et chaque articulation d'une rampe sur le pont est équipée d'un dispositif de blocage déterminé de façon à permettre un libre débattement angulaire de la rampe en dessous du niveau du pont, mais à l'interdire au-dessus de ce niveau.

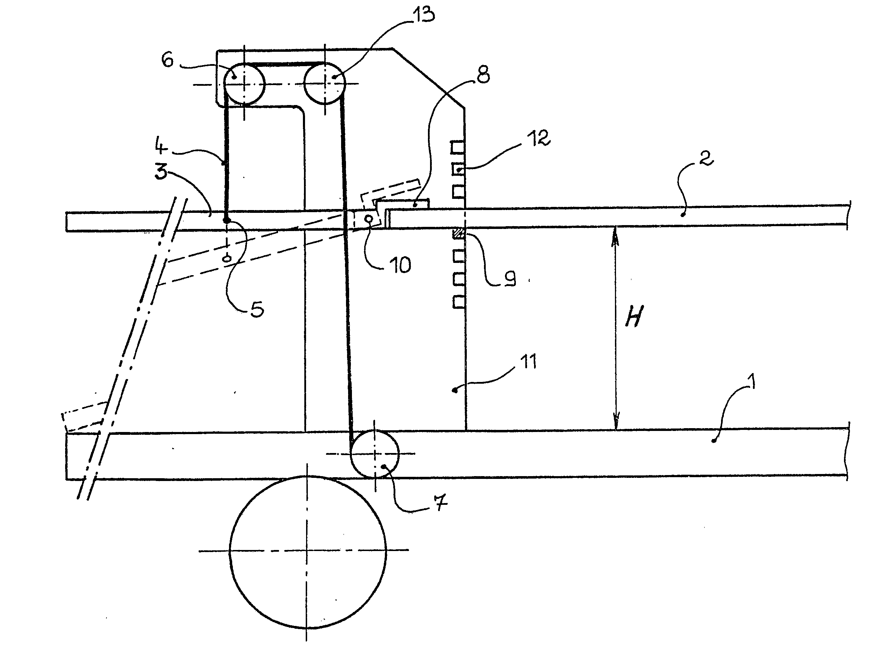

L'invention sera mieux comprise à l'aide de la description suivante d'un exemple préférentiel de réalisation en référence au dessin unique annexé qui représente une vue latérale schématique d'une des extrémités d'un wagon porte-automobiles selon l'invention.

Sur la figure, il n'a été représenté pour plus de clarté qu'une des deux extrémités du wagon, étant bien entendu que l'autre extrémité est totalement symétrique par rapport au plan de symétrie transversal du wagon.

De manière classique, le wagon schématisé est muni d'un plancher inférieur fixe 1, de montants 11 et d'un pont supérieur 2 équipé à chaque extrémité d'une rampe d'accès 3 articulée autour d'un axe 10. Le pont supérieur 2 est mobile de bas en haut, et sa hauteur H par rapport au plancher 1 est réglable grâce à des barres transversales d'appui 9 encastrables dans des crans 12 des montants 11.

Conformément à l'invention, l'extrémité articulée en 10 de la rampe 3 est munie d'une butée 8 en forme de talon, positionnée de manière qu'elle permette l'inclinaison de la rampe 3 vers le bas, comme représenté en traits interrompus sur le dessin, et qu'elle interdise au contraire le relevage de celle-ci au-delà du moment où le pont supérieur 2 et la rampe 3 sont en alignement, comme représenté en traits pleins.

Un câble 4, attaché en un point 5 de la rampe 3 et s'enroulant autour de deux poulies de renvoi 6 et 13, permet à l'aide d'un treuil 7 placé sur le côté du plancher 1 d'incliner et de relever la rampe 3.

On remarque alors que, si l'on continue à enrouler le treuil dans le sens du relevage de la rampe, à partir du moment où la rampe 3 et le plancher 2 sont alignés comme représentés en traits pleins, on provoque le soulèvement du pont supérieur tout entier, et en particulier de sa partie centrale 2 qui, jusque-là, reposait sur la barre d'appui 9. L'appui 9 peut alors être déplacé et inséré dans un autre cran 12 du montant 11. En manœuvrant le treuil en sens inverse, on provoque la descente de l'ensemble 2 et 3 jusqu'au moment où le pont 2 vient à nouveau reposer sur l'appui 9. A partir de là, si l'on continue la manœuvre, seule la rampe 3 continue à descendre en pivotant dans son articulation 10, pour prendre une position de chargement de véhicules.

On réalise ainsi, à l'aide du même dispositif mécanique, aussi bien l'inclinaison de la rampe 3 que le réglage en hauteur H du pont supérieur 2. Cette dernière manœuvre peut être réalisée à vide, de sorte que le poids à manœuvrer n'est autre que le poids propre du pont supérieur.

La hauteur H étant réglée, on incline jusqu'au maximum la rampe d'accès 3, ce qui permet le chargement des véhicules sur le pont supérieur 2. Lorsque ce chargement est terminé, on remonte, à l'aide du treuil 7, la rampe 3, ce qui n'est pas une opération trop difficile, car la longueur de cette rampe est généralement telle qu'elle ne puisse pas contenir plus d'un seul véhicule.

Il va de soi que l'invention n'est pas limitée à l'exemple de réalisation qui vient d'être décrit, mais qu'elle couvre également les réalisations utilisant des moyens équivalents.

Ainsi le talon 8 de l'articulation 10 pourrait être remplacé par tout autre dispositif de blocage de l'articulation au-delà de la position angulaire correspondant à l'alignement rampe-pont, comme par exemple un système à broches. De même le dispositif de levage à câble, treuil et poulies pourrait être remplacé par tout autre dispositif équivalent tel qu'un vérin, un système à vis ou à crémaillère, l'essentiel étant que le point d'action 5 soit situé sur la rampe 3 de façon à permettre, selon la

position angulaire de la rampe, le déplacement soit de la rampe seule, soit de l'ensemble pont-rampe.

## Revendication

Véhicule porte-automobiles à deux étages constitués par un plancher inférieur (1) et un pont supérieur mobile (2) reposant sur des appuis réglables (9), le pont supérieur étant, à chacune de ses extrémités, équipé de moyens de déplacement vertical et muni d'une rampe d'accès articulée (3), caractérisé en ce que les points d'action (5) des moyens (4, 6, 13, 7) de déplacement vertical du pont supérieur (2) sont situés sur les rampes d'accès (3) et en ce que chaque articulation (10) d'une rampe (3) sur le pont (2) est équipée d'un dispositif de blocage (8) déterminé de façon à permettre un libre débattement angulaire de la rampe en dessous du niveau du pont (2), mais à l'interdire au-dessus de ce niveau.

## Patentanspruch

Fahrzeug zum Transport von Kraftfahrzeugen, mit zwei Stufen, die aus einem unteren Boden (1) und einer auf zwei verstellbaren Anschlägen (9) liegenden beweglichen oberen Brücke (2) bestehen, wobei die obere Brücke an ihren beiden Enden mit Vorrichtungen zur vertikalen Bewegung und mit einer schwenkbaren Auffahrtbahn (3) ausgestattet ist, dadurch gekennzeichnet, dass die Angriffspunkte (5) der Vorrichtungen (4, 6, 13, 7) zur vertikalen Bewegung der oberen Brücke (2) an den Auffahrtbahnen liegen, und dass jede Gelenkstelle (10) einer Auffahrtbahn (3) mit der Brücke (2) mit einer Sperrvorrichtung (8) versehen ist, die eine freie Winkelbewegung der Auffahrtbahn unterhalb der Brückenebene (2) erlaubt, die aber diese Winkelbewegung oberhalb der Ebene behin-dert.

## Claim

Double deck automobile carrier having a lower deck (1) and an upper deck (2) supported by adjustable supports (9), said upper deck (2) being provided at either end with vertically displacing means and with an articulated access ramp, characterized by the fact that the anchoring means (5) of said upper deck vertically displacing means (4, 6, 13, 7) are located on said access ramps (3) and that each articulation (10) of a ramp (3) relative to the upper deck (2) is equipped with blocking means (8) allowing free angular movement of said ramp below the level of said upper deck and forbidding said movement above it.